# EUROPEAN PATENT SPECIFICATION

(11) **EP 3 536 591 B1**
(45) Date of publication and mention of the grant of the patent: **15.12.2021**
(21) Application number: 19161121.9
(22) Date of filing: 06.03.2019
(51) Int. Cl.: B62K 19/40, B62M 7/04, B62K 11/06, B62K 19/28, B62K 19/48, B62J 43/16, B62J 43/28, B60L 50/64, B62K 19/16

(54) **STRADDLED ELECTRIC VEHICLE**
ELEKTRISCHES GRÄTSCHSITZFAHRZEUG
VÉHICULE ÉLECTRIQUE DU TYPE À ENFOURCHER

(30) Priority: 08.03.2018 JP 2018041660
(43) Date of publication of application: 11.09.2019
(73) Proprietor: YAMAHA HATSUDOKI KABUSHIKI KAISHA, Iwata-shi, Shizuoka 438-8501 (JP)
(72) Inventor: TOYOTA, Takeshi, Shizuoka, 438-8501 (JP); YAMADA, Masatoshi, 438-0026 Shizuoka (JP)
(74) Representative: Zimmermann, Tankred Klaus

(56) References cited:
- EP-A1- 2 873 599
- WO-A1-2014/154295
- JP-A- H1 179 045
- JP-A- H07 123 516

## Description

### TECHNICAL FIELD

The present invention relates to a straddled electric vehicle equipped with a battery and an electric motor.

### BACKGROUND ART

A common straddled electric vehicle is equipped with an electric motor and a control apparatus. The electric motor is supplied with electric power to generate driving force. The control apparatus includes a control circuit and a heat sink. The control circuit controls the current that flows in the electric motor. The heat sink dissipates heat generated in the control circuit into the air.

Document EP2873599 A1 describes a saddle-type vehicle provided with: a motor control unit that receives electrical power from a battery which also supplies the electrical power to the electric motor and a case that accommodates the motor control unit. The case is positioned downward of the battery and forward of the electric motor being provided in a posture in which the length in the front-rear direction of the accommodating portion is less than the vertical height thereof.

Document WO2014/154295 A1 describes a motor scooter, in particular an electric motor scooter with an on-board rechargeable battery powering an electric motor to attain locomotion. Said motor scooter comprises a main frame with frame sections at least partly extending along an outline of the motor scooter, the frame sections being bridged by cross members supporting electric drive modules between the frame sections. The electric drive modules include one or more removable batteries and/or power electronics and/or a charging unit.

Document JP H1179045 A is directed to a scooter-type vehicle being provided with a motor as the power unit and batteries for feeding the motor in the forward lower portion of its body frame. Document JP H1179045 A discloses a straddled electric vehicle according to the preamble of present claim 1. The body frame is mounted on its main frame in the front with a vertically swingable front swing arm. The main frame serving also to hold the batteries is provided at its forward portion with a front pivot, whereas a large load on a wheel is transmitted by way of the swing arm and the pivot to the battery-holding rigid main frame.

Document JP H07123516 A discloses a scooter-type motor vehicle, wherein an overvoltage preventive unit comprises a drive motor for running a motor vehicle, a battery for feeding power to the motor and a battery sensor for detecting a residual capacity of the battery. When a detection signal from a battery sensor drops below a preset level, output from the battery to the motor is lowered to prevent an overdischarge.

### CITATION LIST

### PATENT LITERATURE

Patent Literature 1: Japanese Patent Application Publication No. 2013-32128
Patent Literature 2: Japanese Patent Application Publication No. 2012-91595

### SUMMARY OF INVENTION

### TECHNICAL PROBLEM

Since the control circuit controls the electric current that flows in the electric motor, it generates a large amount of heat. For that reason, the heat sink is large in size so as to be able to dissipate a large amount of heat. Since the control apparatus includes a large heat sink, the designer designs the straddled electric vehicle so as to make space for the control apparatus.

On the other hand, the straddled electric vehicle includes a vehicle body. The vehicle body supports components of the straddled electric vehicle such as a steering mechanism, a seat, an electric motor, and the like. For that reason, the vehicle body may be required to have a high rigidity. Accordingly, the designer designs the straddled electric vehicle so as to ensure the rigidity of the vehicle body. However, placing priority on ensuring the rigidity of the vehicle body may make it hard to make space for the control apparatus. Further, placing priority on making the space for the control apparatus may make it hard to ensure the rigidity of the vehicle body.

A conventional straddled electric vehicle is described, for example, in Patent Literatures 1 and 2. In the straddled electric vehicle described in Patent Literatures 1 and 2, the control apparatus is disposed behind a front wheel in a vehicle-body backward direction, and below the vehicle body in a vehicle-body downward direction. However, in Patent Literatures 1 and 2, there is no mention about concurrently ensuring the rigidity of the vehicle body and making the space for the control apparatus.

Accordingly, it is an object of the present invention to provide a straddled electric vehicle which can concurrently ensuring the rigidity of vehicle body and making the space for control apparatus.

### SOLUTION TO PROBLEM

A straddled electric vehicle according to the invention is defined by the subject-matter of independent claim 1. Additional optional features of the straddled electric vehicle of the invention are provided by dependent claims 2-9. According to claim 1, the straddled electric vehicle of the invention includes:
at least one steerable wheel;
at least one driving wheel;
a steering mechanism for steering the at least one steerable wheel in response to operation by a rider;
a battery;
a power unit including an electric motor which is supplied with power from the battery to generate driving force, the power unit being adapted to rotate the at least one driving wheel with the driving force generated by the electric motor;
a control apparatus including a control circuit and a heat sink, wherein the control circuit controls the electric motor, and the heat sink is in contact with the control circuit to dissipate heat generated by the control circuit; and
a vehicle body, wherein
the vehicle body supports the at least one steerable wheel, the at least one driving wheel, the steering mechanism, the battery, the power unit, and the control apparatus,
the vehicle body includes a vehicle-body left part which is a portion located to the left of a center of the vehicle body in a vehicle-body left-right direction, and a vehicle-body right part which is a portion located to the right of the center of the vehicle body in the vehicle-body left-right direction , and
the vehicle body forms a vehicle body space extending in a vehicle-body front-back direction between the vehicle-body left part and the vehicle-body right part, and wherein
the vehicle body has a structure in which the heat sink which dissipates heat generated when the control circuit controls the electric motor is secured to both the vehicle-body left part and the vehicle-body right part such that at least a part of the control circuit is located in the vehicle body space which is formed so as to extend in the vehicle-body front-back direction between the vehicle-body left part and the vehicle-body right part.

According to the straddled electric vehicle of claim 1, it is possible to concurrently ensuring the rigidity of the vehicle body and making the space for the control apparatus. To be more specific, the vehicle body forms a vehicle body space extending in the vehicle-body front-back direction between the vehicle-body left part and the vehicle-body right part. The vehicle body having such a structure may deform, as a result of force being applied to the vehicle body, in such a way that spacing between the vehicle-body left part and the vehicle-body right part changes. For that reason, the vehicle body may in some cases include a large reinforcing member for joining the vehicle-body left part with the vehicle-body right part.

However, when the vehicle body includes a reinforcing member, it becomes hard to make a space for the control apparatus as described below. The control apparatus includes the control circuit and the heat sink. A large electric current flows in the electric motor. The control circuit generates a large amount of heat since it controls the electric motor. The heat sink has a large heat capacity for dissipating a large amount of heat generated by the control circuit. For that reason, the heat sink is large in size. The designer designs the straddled electric vehicle such that the position of the large heat sink and the position of the large reinforcing member will not be overlapped. As a result, it becomes hard to make a space for the control apparatus.

Here, the heat sink is large in size since it has a large heat capacity. Therefore, the heat sink has a high rigidity, and the heat sink can be used as a reinforcing member. Accordingly, in the straddled electric vehicle of claim 1, the vehicle body has a structure in which the heat sink is secured to both of the vehicle-body left part and the vehicle-body right part such that at least a part of the control circuit is located in the vehicle body space. In this way, the heat sink bridges the vehicle-body left part with the vehicle-body right part. As a result, the heat sink restricts the vehicle body from deforming in such a way that the spacing between the vehicle-body left part and the vehicle-body right part changes. Therefore, in the straddled electric vehicle of claim 1, the rigidity of the vehicle body is ensured. Further, in the straddled electric vehicle of claim 1, the heat sink functions as the reinforcing member. Therefore, a conventional large reinforcing member is downsized, or a conventional large reinforcing member is eliminated. As a result, according to the straddled electric vehicle of claim 1, it becomes easy to make the space for the control apparatus.

According to the straddled electric vehicle of claim 2, at least a part of the heat sink is exposed from the vehicle-body left part and the vehicle-body right part so as to be visible in at least one direction of the vehicle-body frontward direction, the vehicle-body leftward direction, and the vehicle-body rightward direction.

According to the straddled electric vehicle of claim 2, it is possible to ensure the rigidity of the vehicle body by the heat sink. Further, since at least a part of the heat sink is exposed from the vehicle-body left part and the vehicle-body right part so as to be visible in at least one direction of the vehicle-body backward direction, the vehicle-body leftward direction, and the vehicle-body rightward direction, it is possible to increase heat dissipation of the heat sink.

According to the straddled electric vehicle of claim 1, the vehicle body includes a vehicle body opening, which is located between the vehicle-body left part and the vehicle-body right part as seen in the vehicle-body downward direction, and which connects the inside of the vehicle body space and the outside of the vehicle body space.

In the straddled electric vehicle of claim 1, the vehicle body opening is located between the vehicle-body left part and the vehicle-body right part. Therefore, the vehicle body is likely to deform in such a way that the spacing between the vehicle-body left part and the vehicle-body right part changes. Accordingly, the vehicle body has a structure in which the heat sink is secured to both of the vehicle-body left part and the vehicle-body right part such that at least a part of the control apparatus is located in the vehicle body space. As a result, in the straddled electric vehicle of claim 1, the deformation of the vehicle body is effectively restricted.

According to the straddled electric vehicle of claim 3, at least a part of the vehicle body opening is located between the at least one steerable wheel and the at least one driving wheel in the vehicle-body front-back direction.

In the straddled electric vehicle of claim 3, the deformation of the vehicle body is more effectively restricted. To be more specific, in the straddled electric vehicle of claim 3, at least a part of the vehicle body opening is located between the at least one steerable wheel and the at least one driving wheel in the vehicle-body front-back direction. In such a case, when at least one steerable wheel or at least one driving wheel is subjected to a force from the road surface, the vehicle body deforms in such a way that the spacing between the vehicle-body-opening left part and the vehicle-body-opening right part changes. The vehicle-body-opening left part is a portion located to the left of the vehicle body opening in the vehicle-body left part as seen in the vehicle-body downward direction. The vehicle-body-opening right part is a portion located to the right of the vehicle body opening in the vehicle-body right part as seen in the vehicle-body downward direction. For example, when the at least one steerable wheel is subjected to a force from the road surface to the vehicle-body upward direction, the front part of the vehicle body is pushed in the vehicle-body backward direction in an upper part of the vehicle body. That is, in the upper part of the vehicle body, the vehicle body is subjected to a force in such a way that the distance between the front end of the vehicle body and the rear end of the vehicle body decreases. Moreover, in the lower part of the vehicle body, the front part of the vehicle body is pulled in the vehicle-body frontward direction. That is, in the lower part of the vehicle body, the vehicle body is subjected to a force in such a way that the distance between the front end of the vehicle body and the rear end of the vehicle body increases. As a result, the spacing between the vehicle-body-opening left part and the vehicle-body-opening right part changes. Accordingly, in the straddled electric vehicle of claim 3, the vehicle body has a structure in which the heat sink is secured to both the vehicle-body left part and the vehicle-body right part such that at least a part of the control apparatus is located in the vehicle body space. As a result, in the straddled electric vehicle of claim 3, the deformation of the vehicle body is more effectively restricted.

According to the straddled electric vehicle of claim 1, the battery is disposed in the vehicle body space.

According to the straddled electric vehicle of claim 1, it becomes possible that the vehicle body holds the battery.

According to the straddled electric vehicle of claim 4, the vehicle body opening permits the battery to pass through the vehicle body opening.

According to the straddled electric vehicle of claim 4, it becomes possible to attach the battery to the vehicle body through the vehicle body opening and to detach the battery through the vehicle body opening.

According to the straddled electric vehicle of claim 5, the vehicle body opening is located above the battery in the vehicle-body upward direction.

According to the straddled electric vehicle of claim 5, it becomes easy to attach the battery to the vehicle body through the vehicle body opening and to detach the battery through the vehicle body opening.

According to the straddled electric vehicle of claim 6,
a front end of the vehicle body opening is located above a rear end of the vehicle body opening in the vehicle-body upward direction, and
an upper end of the front end part of the battery is located further upward in the vehicle-body upward direction than an upper end of the rear end part of the battery.

According to the straddled electric vehicle of claim 6, the vehicle body opening has a similar shape to that of an upper face of the battery as seen in the vehicle-body leftward or rightward direction. This makes it possible to bring the vehicle body opening close to the upper face of the battery.

According to the straddled electric vehicle of claim 7, the vehicle body further includes a lid part for covering the vehicle body opening.

According to the straddled electric vehicle of claim 8,
a section which passes through the battery and is orthogonal to the vehicle-body front-back direction is defined as a first section, and
in the first section at any position in the vehicle-body front-back direction, an upper end of the vehicle body is located further upward in the vehicle-body upward direction than an upper end of the battery.

According to the straddled electric vehicle of claim 8,
the battery becomes less likely to be displaced with respect to the vehicle body. To be more specific, in the straddled electric vehicle of claim 8,
the upper end of the vehicle body is located further upward than the upper end of the battery in the first section which passes through the battery and is at any position in the vehicle-body front-back direction. As a result, a substantially entire surface of a left face of the battery will be supported by the vehicle-body left part. Moreover, a substantially entire surface of the right face of the battery will be supported by the vehicle-body right part. As a result, the battery becomes less likely to be displaced in the vehicle-body left-right direction with respect to the vehicle body.

According to the straddled electric vehicle of claim 9, the vehicle body is disposed between a steerable wheel axle which is a rotary shaft of the steerable wheel and a driving wheel axle which is a rotary shaft of the driving wheel as seen in the vehicle-body upward or downward direction.

The above described purposes and other purposes, features, aspects, and benefits of the present invention will become further apparent from the following detailed description of embodiments of the present invention which is to be presented in relation to the appended drawings.

As used herein, the term "and/or" includes any and all combinations of one or more of the associated listed items.

It will be further understood that the terms "including," "comprising" or "having" and variations thereof when used in this specification, specify the presence of stated features, steps, operations, elements, components, and/or their equivalents but do not preclude the presence or addition of one or more other features, steps, operations, elements, components, and/or groups thereof.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In the following description, for purposes of explanation, numerous specific details are set forth in order to provide a thorough understanding of the present invention. It will be evident, however, to one skilled in the art that the present invention may be practiced without these specific details. The present disclosure is to be considered as an exemplification of the invention, and is not intended to limit the invention to the specific embodiments illustrated by the figures or description below. The scope of the invention is defined by the appended claims.

### ADVANTAGEOUS EFFECTS OF INVENTION

According to the present invention, it is possible to concurrently ensuring the rigidity of the vehicle body and making the space for the control apparatus.

### BRIEF DESCRIPTION OF DRAWINGS

[FIG. 1] FIG. 1 is a view of the straddled electric vehicle 1 as seen in a straddled-electric-vehicle 1 rightward direction, and a perspective exploded view of a vehicle body 2 and a control apparatus 10 of the straddled electric vehicle 1.
[FIG. 2] FIG. 2 is a perspective exploded view of the vehicle body 2 and a shock absorber 62.
[FIG. 3] FIG. 3 is a top view of the vehicle body 2.
[FIG. 4] FIG. 4 is a sectional view taken along X-X in FIG. 2.
[FIG. 5] FIG. 5 is a view of the vehicle body 2 and the control apparatus 10 of a straddled electric vehicle 1a as seen in a frontward direction f.

### DESCRIPTION OF EMBODIMENTS

### [General configuration]

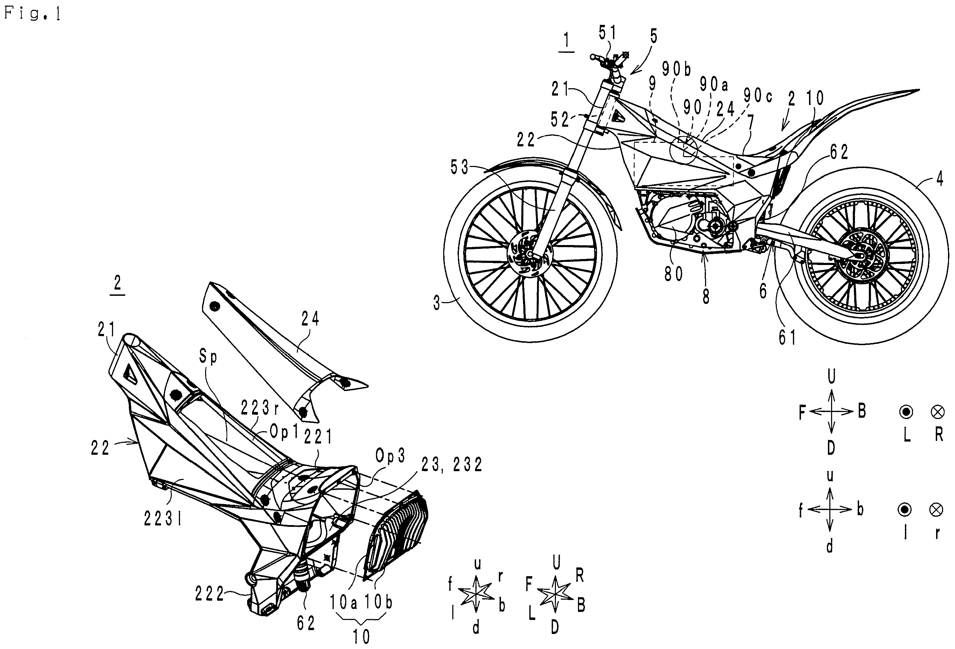

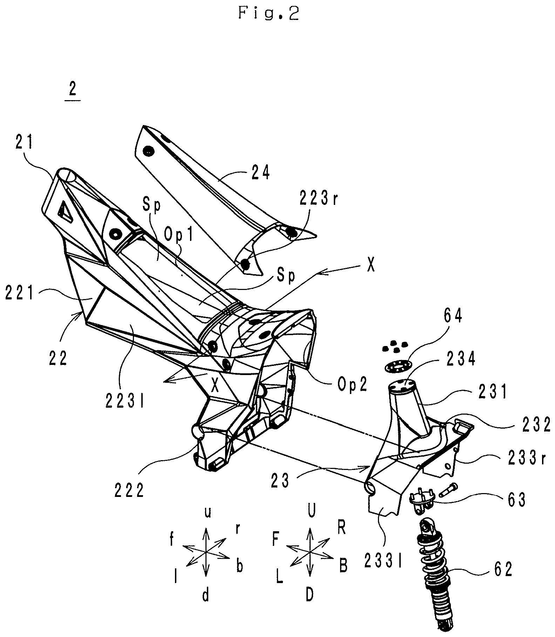

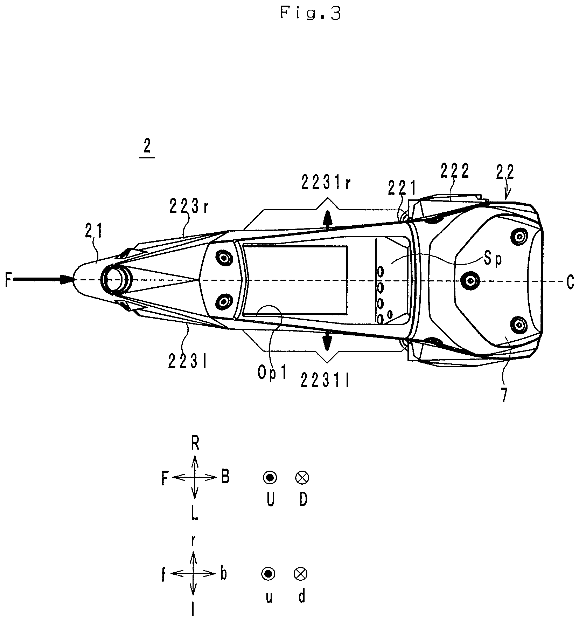

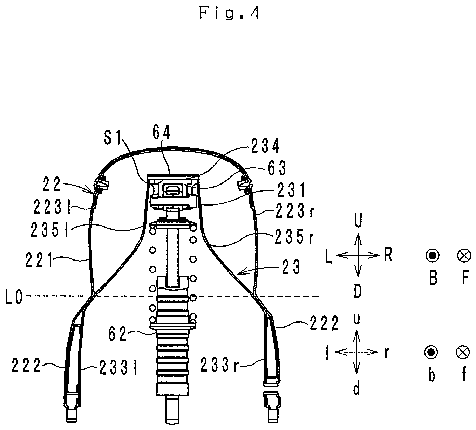

Hereinafter, a general configuration of a straddled electric vehicle according to one embodiment will be described with reference to the drawings. In the present embodiment, as an example of the straddled electric vehicle, a two-wheel leaning vehicle including a vehicle body which is capable of leaning, a front wheel, and a rear wheel will be exemplified. The straddled electric vehicle is a vehicle for motorcycle trials. FIG. 1 is a view of a straddled electric vehicle 1 as seen in the straddled-electric-vehicle 1 rightward direction, and a perspective exploded view of a vehicle body 2 and a control apparatus 10 of the straddled electric vehicle 1. FIG. 2 is a perspective exploded view of the vehicle body 2 and a shock absorber 62. FIG. 3 is a top view of the vehicle body 2. FIG. 4 is a sectional view taken along X-X in FIG. 2.

Hereinafter, the straddled-electric-vehicle 1 frontward direction is referred to as a frontward direction "F". The straddled-electric-vehicle 1 backward direction is referred to as a backward direction "B". The straddled-electric-vehicle 1 leftward direction is referred to as a leftward direction "L". The straddled-electric-vehicle 1 rightward direction is referred to as a rightward direction "R". The straddled-electric-vehicle 1 upward direction is referred to as an upward direction "U". The straddled-electric-vehicle 1 downward direction is referred to as a downward direction "D". The straddled-electric-vehicle 1 front-back direction is referred to as a front-back direction "FB". The straddled-electric-vehicle 1 left-right direction is referred to as a left-right direction "LR". The straddled-electric-vehicle 1 up-down direction is referred to as an up-down direction "UD". The straddled-electric-vehicle 1 frontward direction refers to a frontward direction when taking a rider who is astride the straddled electric vehicle 1 as a reference. The straddled-electric-vehicle 1 backward direction refers to a backward direction when taking a rider who is astride the straddled electric vehicle 1 as a reference. The straddled-electric-vehicle 1 leftward direction refers to a leftward direction when taking a rider who is astride the straddled electric vehicle 1 as a reference. The straddled-electric-vehicle 1 rightward direction refers to a rightward direction when taking a rider who is astride the straddled electric vehicle 1 as a reference. The straddled-electric-vehicle 1 upward direction refers to an upward direction when taking a rider who is astride the straddled electric vehicle 1 as a reference. The straddled-electric-vehicle 1 downward direction refers to a downward direction when taking a rider who is astride the straddled electric vehicle 1 as a reference.

Further, in the straddled electric vehicle 1, the vehicle body 2 can lean in the leftward direction L or the rightward direction R. In a case where the vehicle body 2 leans in the leftward direction L or rightward direction R, the vehicle-body 2 up-down and left-right directions do not match the straddled-electric-vehicle 1 up-down direction UD and left-right directions LR, respectively. On the other hand, the vehicle-body 2 up-down and left-right directions in an upright state match the straddled-electric-vehicle 1 up-down direction UD and left-right direction LR, rcspcctivcly. Hereinafter, the vehicle-body 2 frontward direction is referred to as a frontward direction "f". The vehicle-body 2 backward direction is referred to as a backward direction "b". The vehicle-body 2 leftward direction is referred to as a leftward direction "1". The vehicle-body 2 rightward direction is referred to as a rightward direction "r". The vehicle-body 2 upward direction is referred to as an upward direction "u". The vehicle-body 2 downward direction is referred to as a downward direction "d". The vehicle-body 2 front-back direction is referred to as a front-back direction "fb". The vehicle-body 2 left-right direction is referred to as a left-right direction "lr". The vehicle-body 2 up-down direction is referred to as an up-down direction "ud".

In the present specification, an axis or a member extending in the front-back direction does not necessarily refer to only an axis or a member that is parallel with the front-back direction. An axis or a member extending in the front-back direction refers to an axis or a member that is inclined within a range of ±45° with respect to the front-back direction. Similarly, herein, an axis or a member extending in the up-down direction refers to an axis or a member that is inclined within a range of ±45° with respect to the up-down direction. Likewise, an axis or a member extending in the left-right direction refers to an axis or a member that is inclined within a range of ±45° with respect to the left-right direction. Further, the term "an upright state of the vehicle body 2" means a state in which the front wheel is neither steered nor leaned, without a rider riding on and without fuel loaded in the straddled electric vehicle 1.

In the present specification, the phrase "a first member is supported by a second member" includes a case in which the first member is attached to the second member so as to be immovable with respect to the second member (that is, is secured thereto), and a case in which the first member is attached to the second member so as to be movable with respect to the second member. Further, the phrase "the first member is supported by the second member" includes both of a case in which the first member is directly attached to the second member, and a case in which the first member is attached to the second member via a third member.

In the present specification, the phrase "the first member and the second member which are aligned in the front-back direction" shows the following state. That is a state in which when the first member and the second member are seen in a direction perpendicular to the front-back direction, both of the first member and the second member are disposed on any straight line indicating the front-back direction. In the present specification, the phrase "the first member and the second member which are aligned in the front-back direction when seen in the up-down direction" shows the following state. That is a state in which when the first member and the second member are seen in the up-down direction, both of the first member and the second member are disposed on any straight line indicating the front-back direction. In this case, when the first member and the second member are seen in the left-right direction which is different from the up-down direction, either one of the first member and the second member may not be disposed on any straight line indicating the front-back direction. Note that the first member and the second member may be in contact with each other. The first member and the second member may also be apart from each other. A third member may be present between the first member and the second member. This definition will be applied to directions other than the front-back direction.

In the present specification, the phrase "the first member is disposed further forward than the second member" refers to the following state. The first member is disposed in front of a plane which passes through the front end of the second member and is orthogonal to the front-back direction. In this case, the first member and the second member may be aligned in the front-back direction, and may not be aligned. This definition will apply to directions other than the front-back direction.

In the present specification, the phrase "the first member is disposed in front of the second member" refers to the following state. At least a part of the first member is disposed in a region through which the second member passes when moving forward in parallel. Thus, the first member may be accommodated in the region through which the second member passes when moving forward in parallel, or protrudes from the region through which the second member passes when moving forward in parallel. In this case, the first member and the second member are aligned in the front-back direction. This definition will be applied to directions other than the front-back direction.

In the present specification, the phrase "the first member is disposed in front of the second member as seen in the left-right direction" refers to the following state. The first member and the second member are aligned in the front-back direction as seen in the left-right direction, and a part of the first member opposed to the second member is disposed in front of the second member as seen in the left-right direction. In this definition, the first member and the second member may not be aligned in the front-back direction in a three dimensional space. This definition will be applied to directions other than the front-back direction.

In the present specification, unless otherwise stated, each part of the first member is defined as follows. A front part of the first member means a front half of the first member. A rear part of the first member means a back half of the first member. A left part of the first member means a left half of the first member. A right part of the first member means a right half of the first member. An upper part of the first member means an upper half of the first member. A lower part of the first member means a lower half of the first member. The upper end of the first member means an end of the first member in the upward direction. The lower end of the first member means an end of the first member in the lower direction. The front end of the first member means an end of the first member in the frontward direction. The rear end of the first member means an end of the first member in the backward direction. The right end of the first member means an end of the first member in the rightward direction. The left end of the first member means an end of the first member in the leftward direction. The upper end part of the first member means the upper end and its vicinity of the first member. The lower end part of the first member means the lower end and its vicinity of the first member. The front end part of the first member means the front end and its vicinity of the first member. The rear end part of the first member means the rear end and its vicinity of the first member. The right end part of the first member means the right end and its vicinity of the first member. The left end part of the first member means the left end and its vicinity of the first member. The first member means a member constituting the straddled electric vehicle 1.

In the present specification, the phrase "a component (member, space, or opening) is formed (located or provided) between the first member and the second member" means that the component is present between the first member and the second member in a direction in which the first member and the second member are aligned. However, the component may protrude or may not protrude from the first member or the second member in a direction orthogonal to the direction in which the first member and the second member are aligned.

As shown in FIG. 1, a straddled electric vehicle 1 includes a vehicle body 2, a front wheel 3, a rear wheel 4, a steering mechanism 5, a suspension 6, a seat 7, a power unit 8, a battery 9, and a control apparatus 10. The vehicle body 2 leans in the leftward direction L when the straddled electric vehicle 1 turns to the leftward direction L. The vehicle body 2 leans in the rightward direction R when the straddled electric vehicle 1 turns to the rightward direction R. The vehicle body 2 includes fiber-reinforced resins in which resin (for example, epoxy resin, vinyl ester, phenol resin, polyamide, polypropylene, polyphenylene sulfide, etc.) is reinforced by fibers (for example, carbon fiber, glass fiber, etc.). In the present embodiment, the vehicle body 2 is formed of a carbon fiber-reinforced resin in which resin is reinforced by a fiber sheet including carbon fibers. The vehicle body 2 is disposed between the front axle (to be described later in detail) and a rear axle (to be described later in detail) as seen in the vehicle-body upward direction u or the vehicle-body downward direction d. The vehicle body 2 includes, as shown in FIG. 2, a head pipe part 21, a vehicle-body main part 22, a shock-absorber attachment part 23, and a lid part 24.

The head pipe part 21 is a front end part of the vehicle body 2. The head pipe part 21 is a cylinder having a center axis extending in the up-down direction ud. However, the head pipe part 21 is disposed so as to be slightly inclined with respect to the up-down direction ud such that the upper end part of the head pipe part 21 is located further backward than the lower end part of the head pipe part 21 in the backward direction b as seen in the leftward direction 1 or the rightward direction r.

The vehicle-body main part 22 is located behind the head pipe part 21 in the backward direction b as seen in the leftward direction l or the rightward direction r. The head pipe part 21 and the vehicle-body main part 22 are formed as a single member. The phrase "a plurality of structures are formed as a single member" means that a plurality of structures are molded by a single die. The vehicle-body main part 22 has a shape which is obtained by rotating a letter L counterclockwise by 90°, as seen in the leftward direction l. The vehicle-body main part 22 includes a vehicle-body main-part upper part 221 and a vehicle-body main-part lower part 222. The vehicle-body main-part upper part 221 forms, as shown in FIG. 2, a vehicle body space Sp extending in the front-back direction fb by the shock-absorber attachment part 23, the lid part 24, and the heat sink 10b, which are to be described below. The vehicle body space Sp is a sealed space. The vehicle-body main-part upper part 221 is a portion that contributes to the formation of the vehicle body space Sp in the vehicle-body main part 22.

The vehicle-body main-part lower part 222 extends from the rear part of the vehicle-body main-part upper part 221 in the downward direction d. The vehicle-body main-part lower part 222 is a portion that does not contribute to the formation of the vehicle body space Sp.

Moreover, as shown in FIG. 3, a vehicle body opening Op1 is provided on the upper face of the vehicle-body main-part upper part 221. At least a part of the vehicle body opening Op1 is disposed between the front wheel 3 (to be described in detail below) and the rear wheel 4 (to be described in detail below) in the front-back direction fb. In the present embodiment, the whole of the vehicle body opening Op1 is disposed between the front wheel 3 and the rear wheel 4 in the front-back direction fb. The vehicle body opening Op1 has a rectangular shape which has a long side extending in the front-back direction fb and a short side extending in the left-right direction 1r as seen in the downward direction d. As a result, the vehicle body opening Op1 connects the inside of the vehicle body space Sp and the outside of the vehicle body space Sp.

Moreover, as shown in FIG. 2, an opening Op2 is provided in a rear end part of the vehicle-body main part 22. As a result, the opening Op2 connects the inside of the vehicle body space Sp and the outside of the vehicle body space Sp.

The lid part 24 is attached to the upper face of the vehicle-body main part 22, thereby covering the vehicle body opening Op1. The lid part 24 has a structure which is attachable and detachable with respect to the vehicle-body main part 22. In the present embodiment, the lid part 24 is secured to the vehicle-body main part 22 with four screws.

The shock-absorber attachment part 23 supports an upper end part of a shock absorber 62 to be described below. The shock-absorber attachment part 23 is not formed as a single member with the vehicle-body main part 22. That is, the shock-absorber attachment part 23 is a different member from the vehicle-body main part 22.

The shock-absorber attachment part 23 includes a tube part 231, a bottom face part 232, a left-side-face-part supported part 233l, a right-side-face-part supported part 233r, and an attachment surface part 234. The tube part 231 has a cylindrical shape which has an axis line extending in the up-down direction ud as seen in the frontward direction f or the backward direction b. The axis line of the tube part 231 is slightly inclined with respect to the up-down direction ud such that a portion that passes through the upper end of the tube part 231 is located in front of a portion which passes through the lower end of the tube part 231 in the frontward direction f, as seen in the leftward direction l or the rightward direction r.

Moreover, the tube part 231 has an annular shape in a section orthogonal to the center axis. The term "annular" means a shape which connects over the entire perimeter without any break, such as a circle, an ellipse, a rectangle, etc. Therefore, in the shock-absorber attachment part 23, a portion which does not form an annular shape in a section orthogonal to the center axis is not included in the tube part 231. In FIG. 4, the tube part 231 is a portion located above the straight line L0 in the upward direction u in the shock-absorber attachment part 23. Further, the diameter of the tube part 231 is not uniform. The diameter of the tube part 231 increases from its upper end toward its lower end.

The attachment surface part 234 is provided at the upper end of the tube part 231. The attachment surface part 234 covers the opening located at the upper end of the tube part 231. Therefore, the attachment surface part 234 has a disc shape. The attachment surface part 234 has, as shown in FIG. 4, an attachment surface S1 which has a normal vector extending in the downward direction d.

The bottom face part 232 is provided at the lower end part of the tube part 231. The bottom face part 232 extends from the lower end part of the tube part 231 in the backward direction b. The bottom face part 232 has a plate shape. Thus, the bottom face part 232 has an upper face having a normal vector extending in the upward direction u.

The left-side-face-part supported part 233l extends from the left part of the lower end part of the tube part 231 and the left part of the bottom face part 232 in the downward direction d. Therefore, the left-side-face-part supported part 2331 is located further downward in the downward direction d and further leftward in the leftward direction l than the attachment surface part 234. The left-side-face-part supported part 233l is a portion located further downward in the downward direction d than the tube part 231 and the bottom face part 232 in the shock-absorber attachment part 23. In FIG. 4, the left-side-face-part supported part 233l is a portion located below the straight line L0 in the shock-absorber attachment part 23 in the downward direction d. The left-side-face-part supported part 233l has a face having a normal vector extending in the upper-left direction lu and a face having a normal vector extending in the leftward direction l.

The right-side-face-part supported part 233r extends from the right part of the lower end part of the tube part 231 and the right part of the bottom face part 232 in the downward direction d. Therefore, the right-side-face-part supported part 233r is located further downward in the downward direction d and further rightward in the rightward direction r than the attachment surface part 234. The right-side-face-part supported part 233r is a portion located further downward in the downward direction d than the tube part 231 and the bottom face part 232 in the shock-absorber attachment part 23. In FIG. 4, the right-side-face-part supported part 233r is a portion located below the straight line L0 in the shock-absorber attachment part 23 in the downward direction d. The right-side-face-part supported part 233r has a face having a normal vector extending in the upper-right direction ru and a face having a normal vector extending in the rightward direction r.

The shock-absorber attachment part 23 having the above described configuration includes, as shown in FIG. 4, an attachment surface part 234, a left side-face part 2351, and a right side-face part 235r as seen in the frontward direction f or the backward direction b. The left side-face part 2351 extends from the attachment surface S1 in the downward direction d to a location in the leftward direction 1 from the center in the left-right direction lr of the attachment surface S1. In the present embodiment, the left side-face part 2351 extends from the left end of the attachment surface part 234 in the downward direction d. The left side-face part 235l includes a part of the left part of the tube part 231 and a left-side-face-part supported part 233l.

The right side-face part 235r extends from the attachment surface S1 in the downward direction d to a location in the rightward direction r from the center in the left-right direction lr of the attachment surface S1. In the present embodiment, the right side-face part 235r extends from the right end of the attachment surface part 234 in the downward direction d. The right side-face part 235r includes a part of the right part of the tube part 231 and a right-side-face-part supported part 233r. As a result, the attachment surface part 234, the left side-face part 235l, and the right side-face part 235r have a U-shape which is inverted upside down.

Moreover, the fibers of the attachment surface part 234 extend in the left-right direction lr. Therefore, the fiber direction of the attachment surface part 234 is the left-right direction lr. The fibers of the left side-face part 235l extend in the up-down direction ud. The fiber direction of the left side-face part 235l is the up-down direction ud. The fibers of the right side-face part 235r extend in the up-down direction ud. The fiber direction of the right side-face part 235r is the up-down direction ud. The fiber direction means the longitudinal direction of a fiber. In a fiber sheet which is formed in a sheet shape by using fibers, the longitudinal direction of a fiber included in the fiber sheet corresponds to the fiber direction. In the case of a sheet-like member in which fibers are disposed in an intersecting manner, each of the directions of the intersecting fibers is referred to as the fiber direction.

The shock-absorber attachment part 23 configured as described above is attached to the rear part of the vehicle-body main-part upper part 221 and the vehicle-body main-part lower part 222. More precisely, the left part of the vehicle-body main-part lower part 222 supports the left-side-face-part supported part 233l. The face having a normal vector extending in the leftward direction 1 and the face having a normal vector extending in the upper-left direction lu of the left-side-face-part supported part 2331 is secured respectively to the face having a normal vector extending in the rightward direction r and the face having a normal vector extending in the lower-right direction rd of the left part of the vehicle-body main-part lower part 222 with an adhesive. Moreover, the right part of the vehicle-body main-part lower part 222 supports the right-side-face-part supported part 233r. The face having a normal vector extending in the rightward direction r and the face having a normal vector extending in the upper-right direction ru of the right-side-face-part supported part 233r are secured respectively to the face having a normal vector extending in the leftward direction l and the face having a normal vector extending in the lower-left direction ld of the right part of the vehicle-body main-part lower part 222 with an adhesive. As a result, as shown in FIG. 1, the opening Op3 is formed in the rear end part of the vehicle-body main-part upper part 221. The opening Op3 is formed by being surrounded by the left part of the vehicle-body main-part upper part 221, the right part of the vehicle-body main-part upper part 221, and the bottom face part 232. Therefore, the opening Op3 is a portion which is located above the bottom face part 232 in the upward direction u in the opening Op2 (see FIG. 2).

The vehicle body 2 as described so far includes the vehicle-body left part 223l and the vehicle-body right part 223r. The vehicle-body left part 223l is a portion which is located to the left of the center (center line C) in the left-right direction lr of the vehicle body 2. Therefore, the vehicle-body left part 223l includes a left part of the head pipe part 21, a left part of the vehicle-body main-part upper part 221, a left part of the vehicle-body main-part lower part 222, a left part of the shock-absorber attachment part 23, and a left part of the lid part 24. The vehicle-body right part 223r is a portion which is located to the right of from the center (center line C) in the left-right direction lr of the vehicle body 2. Therefore, the vehicle-body right part 223r includes a right part of the head pipe part 21, a right part of the vehicle-body main-part upper part 221, a right part of the vehicle-body main-part lower part 222, a right part of the shock-absorber attachment part 23, and a right part of the lid part 24. Such a vehicle body 2 forms a vehicle body space Sp extending in the front-back direction fb between the vehicle-body left part 223l and the vehicle-body right part 223r. Moreover, the vehicle body opening Op1 is located, as shown in FIG. 3, between the vehicle-body left part 223l and the vehicle-body right part 223r as seen in the downward direction d.

The battery 9 is a power source of the straddled electric vehicle 1. The battery 9 is a secondary battery, for example, a lithium ion battery. The battery 9 has a rectangular parallelepiped shape. As shown in FIG. 1, a step 90 is provided on the upper face of the battery 9. The step 90 includes a connection surface 90a and upper face parts 90b, 90c. The connection surface 90a extends in the up-down direction ud as seen in the rightward direction r. The connection surface 90a has a normal vector extending in the backward direction b. The upper face part 90b extends in the frontward direction f from the upper end of the connection surface 90a as seen in the rightward direction r. The upper face part 90b is a portion which is located near the upper end of the connection surface 90a in the upper face of the battery 9. The upper face part 90c extends in the backward direction b from the lower end of the connection surface 90a as seen in the rightward direction r. The upper face part 90c is a portion which is located near the lower end of the connection surface 90a in the upper face of the battery 9. As a result, the battery 9 has such a shape as that when the battery 9 is disposed in the vehicle body space Sp, the upper end of the front end part of the battery 9 is located further upward in the upward direction u than the upper end of the rear end part of the battery 9. Therefore, the battery 9 has an L-shape as seen in the rightward direction r. Moreover, a connector (not shown) for connecting a cable for charging/discharging the battery 9 is provided in the connection surface 90a.

The battery 9 is supported by the vehicle-body main part 22. The battery 9 is disposed within the vehicle body space Sp. For that reason, the upper end of the vehicle body 2 is located further upward in the upward direction u than the upper end of the battery 9 in a first section at any position in the front-back direction fb. The first section is a section that passes through the battery 9 and is orthogonal to the front-back direction fb. As a result, the battery 9 does not have a portion in which the battery 9 is located above the vehicle body 2 in the upward direction u as seen in the leftward direction l or rightward direction r. That is, the battery 9 does not protrude in the upward direction u from the vehicle body 2 as seen in the leftward direction l or the rightward direction r. In other words, the battery 9 is located below of an upper edge of the vehicle body 2 in the downward direction d as seen in the leftward direction l or the rightward direction r. The upper edge of the vehicle body 2 is a portion bordering on the space which is located above the vehicle body 2 in the upward direction u between the front end of the vehicle body 2 and the rear end of the vehicle body 2 as seen in the leftward direction l or the rightward direction r.

Moreover, the vehicle body opening Op1 is located above the battery 9 in the upward direction u when the battery 9 is disposed in the vehicle body space Sp. The vehicle body opening Op1 permits the battery 9 to pass through the vehicle body opening Op1. This allows the rider to attach the battery 9 to the vehicle-body main part 22 through the vehicle body opening Op1. Moreover, the rider can detach the battery 9 from the vehicle-body main part 22 through the vehicle body opening Op1.

The power unit 8 includes an electric motor 80 and a reduction gear (not shown). The electric motor 80 is supplied with power from the battery 9 to generate driving force. The reduction gear transfers driving force generated by the electric motor 80 to the rear wheel 4 to be described below. In this way, the power unit 8 causes the rear wheel 4 to be rotated by the driving force generated by the electric motor 80. The power unit 8 is supported by the vehicle-body main part 22. Specifically, the power unit 8 is disposed below the vehicle-body main part 22 in the downward direction d. And the power unit 8 is supported by the lower face of the vehicle-body main part 22.

The steering mechanism 5 is disposed around the head pipe part 21. The steering mechanism 5 steers the front wheel 3 in response to the operation by a rider. The steering mechanism 5 includes a handlebar 51, a steering shaft 52, and a front fork 53. The handlebar 51 is operated by the rider. The steering shaft 52 is inserted into the head pipe part 21. As a result, the steering shaft 52 is supported by the vehicle body 2 so as to be rotatable around the center axis of the steering shaft 52 by the rider operating the handlebar 51.

The front fork 53 is secured to the lower end of the steering shaft 52. The front fork 53 has a structure which is branched to the leftward direction l and the rightward direction r from the steering shaft 52 as seen in the backward direction b. The front wheel 3 is supported at the lower end part of the front fork 53 so as to be rotatable around the front axle (steerable wheel axle). The front axle is the rotary shaft of the front wheel 3. Therefore, the front wheel 3 is supported by the vehicle body 2 via the steering mechanism 5. The rider can steer the front wheel 3 by operating the handlebar 51. That is, the front wheel 3 is a steerable wheel. Also, the front wheel 3 is disposed in the front part of the straddled electric vehicle l.

The suspension 6 is supported by the vehicle body 2 and supports the rear wheel 4. The suspension 6 includes a swing arm 61 and a shock absorber 62. The swing arm 61 extends in the backward direction b from the vehicle-body main-part lower part 222 as seen in the rightward direction r. The swing arm 61 is supported by the vehicle-body main part 22 so as to be swingable around the axis passing the front end part of the swing arm 61 in the left-right direction lr. As a result, the rear end part of the swing arm 61 can move in the up-down direction ud with respect to the vehicle-body main part 22.

The rear wheel 4 is the driving wheel of the straddled electric vehicle 1. Therefore, the rear wheel 4 is rotated by the driving force generated by the power unit 8. The rear wheel 4 is supported by the vehicle body 2 via the swing arm 61. Specifically, the rear wheel 4 is supported at a rear end part of the swing arm 61 so as to be rotatable around the rear axle (driving wheel axle). The rear axle is the rotary shaft of the rear wheel 4. Therefore, the rear wheel 4 can move in the up-down direction ud with respect to the vehicle-body main part 22 as the result of the swing arm 61 swinging. Moreover, the rear wheel 4 is disposed in the rear part of the straddled electric vehicle 1.

A shock absorber 62 is disposed behind the battery 9 in the backward direction b and in front of the control apparatus 10 in the frontward direction f to be described below. The shock absorber 62 is disposed, as seen in the leftward direction l or the rightward direction r so as to be slightly inclined with respect to the up-down direction ud such that the upper end part of the shock absorber 62 is disposed further forward in the frontward direction f than the lower end part of the shock absorber 62. The shock absorber 62 supports the rear wheel 4 so as to absorb motion of the rear wheel 4 in the up-down direction ud with respect to the vehicle body 2. The upper end part of the shock absorber 62 is supported at the vehicle body 2. To be more specific, the straddled electric vehicle 1 further includes a bracket 63 and a plate 64. The plate 64 is disposed on the upper face of the attachment surface part 234. The bracket 63 is disposed on the attachment surface S1 of the attachment surface part 234. The bracket 63 and the plate 64 are secured to the attachment surface part 234 with a screw. The bracket 63 supports the upper end part of the shock absorber 62 such that the shock absorber 62 can rotate around a shaft extending in the left-right direction lr. In this way, the shock absorber 62 is supported by the vehicle body 2 at the attachment surface part 234 via the bracket 63. The lower end part of the shock absorber 62 is supported by the swing arm 61. In this way, the shock absorber 62 supports the rear wheel 4 via the swing arm 61. The shock absorber 62 is a combination of a damper and a spring, and can expand and contract in the up-down direction ud. The shock absorber 62 absorbs the motion in the up-down direction ud of the rear wheel 4 with respect to the vehicle body 2 by absorbing swinging of the swing arm 61 with respect to the vehicle body 2.

The seat 7 is supported at the rear part of the vehicle-body main part 22. A rider sits on the seat 7. Thereby, the rider straddles the vehicle body 2.

The control apparatus 10 includes a control circuit 10a and a heat sink 10b as shown in FIG. 1. The control circuit 10a is made up of, for example, a circuit board, an IC, and an electronic component. The control circuit 10a controls the electric motor 80 of the power unit 8 based on the operation of the throttle (not shown) by the rider. The control circuit 10a determines the current to be flown through the electric motor 80 based on a throttle signal outputted from a throttle sensor (not shown) for detecting the rotational angle of a right throttle (not shown). The control circuit 10a increases the current to be supplied from the battery 9 to the electric motor 80 as the rotational angle of the right throttle indicated by the throttle signal increases.

The heat sink 10b is attached behind the control circuit 10a in the backward direction b. The heat sink 10b dissipates heat generated by the control circuit 10a into the air. The heat sink 10b is secured to the rear end part of the vehicle-body main-part upper part 221 and the rear end part of the bottom face part 232 so as to cover the opening Op3. In the present embodiment, the heat sink 10b is secured to the vehicle-body left part 223l with a screw, etc. and is also secured to the vehicle-body right part 223r with a screw, etc. In this way, the heat sink 10b covers the opening Op3. The power unit 8, the heat sink 10b, the vehicle-body main part 22, the shock-absorber attachment part 23, and the lid part 24 form the vehicle body space Sp. The heat sink 10b is made of a metal having excellent heat dissipation and rigidity, such as iron, aluminum, etc.

Further, since the control circuit 10a is located on the front face of the heat sink 10b, it contacts the vehicle body space Sp. In this way, the vehicle body 2 has a structure in which the heat sink 10b which dissipates heat generated when the control circuit 10a controls the electric motor 80 is secured to both the vehicle-body left part 2231 and the vehicle-body right part 223r such that at least a part of the control circuit 10a is located in the vehicle body space Sp. At least a part of such heat sink 10b is exposed from the vehicle-body left part 223l and the vehicle-body right part 223r so as to be visible in the backward direction b, the leftward direction l, and the rightward direction r. However, at least a part of the heat sink 10b may be exposed from the vehicle-body left part 223l and the vehicle-body right part 223r so as to be visible in at least one direction of the backward direction b, the leftward direction l, and the rightward direction r.

### [Advantageous effects]

According to the straddled electric vehicle 1, it is possible to concurrently ensuring rigidity of the vehicle body 2 and making a space for the control apparatus 10. To be more specific, the vehicle body 2 forms a vehicle body space Sp extending in the front-back direction fb, between the vehicle-body left part 223l and the vehicle-body right part 223r. The vehicle body 2 having such a structure may deform, as a result of force being applied to the vehicle body 2, in such a way that spacing between the vehicle-body left part 223l and the vehicle-body right part 223r changes. For that reason, the vehicle body 2 may include a large reinforcing member for joining the vehicle-body left part 223l with the vehicle-body right part 223r.

However, when the vehicle body 2 includes a reinforcing member, it becomes hard to make a space for the control apparatus 10, as described below. The control apparatus 10 includes the control circuit 10a and the heat sink 10b. A large current flows in the electric motor 80. The control circuit 10a generates a large amount of heat since it controls the electric motor 80. The heat sink 10b has a large heat capacity since it dissipates a large amount of heat generated by the control circuit 10a. For that reason, the heat sink 10b is large in size. The designer designs the straddled electric vehicle 1 such that the position of a large heat sink 10b and the position of a large reinforcing member will not overlap. As a result, it becomes hard to make a space for the control apparatus 10.

Here, since the heat sink 10b has a large heat capacity, it is large in size. Therefore, the heat sink 10b has high rigidity. For that reason, the heat sink 10b is used as a reinforcing member. Accordingly, in the straddled electric vehicle 1, the vehicle body 2 has a structure in which the heat sink 10b is secured to both of the vehicle-body left part 2231 and the vehicle-body right part 223r such that at least a part of the control circuit 10a is located in the vehicle body space Sp. As a result, the heat sink 10b bridges the vehicle-body left part 223l with the vehicle-body right part 223r. As a result, the heat sink 10b restricts the vehicle body 2 from deforming in such a way that the spacing between the vehicle-body left part 223l and the vehicle-body right part 223r changes. Therefore, in the straddled electric vehicle 1, the rigidity of the vehicle body 2 is ensured. Further, in the straddled electric vehicle 1, the heat sink 10b functions as the reinforcing member. Therefore, a conventional large reinforcing member is downsized, or a conventional large reinforcing member is eliminated. As a result, in the straddled electric vehicle 1, it becomes easy to make a space for the control apparatus 10.

Moreover, according to the straddled electric vehicle 1, the rigidity of the vehicle body 2 is ensured by the heat sink 10b. Further, since at least a part of the heat sink 10b is exposed from the vehicle-body left part 223l and the vehicle-body right part 223r so as to be visible in at least one direction of the backward direction b, the leftward direction l, or the rightward direction r, it is possible to improve heat dissipation of the heat sink 10b.

Moreover, in the straddled electric vehicle 1, the vehicle body opening Op1 is located between the vehicle-body left part 223l and the vehicle-body right part 223r. For that reason, the vehicle body 2 is likely to deform in such a way that the spacing between the vehicle-body left part 223l and the vehicle-body right part 223r changes. Accordingly, the vehicle body 2 has a structure in which the heat sink 10b is secured to both of the vehicle-body left part 223l and the vehicle-body right part 223r such that at least a part of the control circuit 10a is located in the vehicle body space Sp. As a result, in the straddled electric vehicle 1, deformation of the vehicle body 2 is effectively restricted.

Moreover, in the straddled electric vehicle 1, deformation of the vehicle body 2 is restricted more effectively. To be more specific, in the straddled electric vehicle 1, the vehicle body opening Op1 is located between the front wheel 3 and the rear wheel 4 in the front-back direction fb. In this case, when the front wheel 3 or the rear wheel 4 is subjected to a force from the road surface, the vehicle body 2 deforms in such a way that the spacing between the vehicle-body-opening left part 2231l and the vehicle-body-opening right part 2231r changes. The vehicle-body-opening left part 2231l is, as shown in FIG. 3, a portion which is located to the left of the vehicle body opening Op1 in the leftward direction l in the vehicle-body left part 223l as seen in the downward direction d. The vehicle-body-opening right part 223l r is, as shown in FIG. 3, a portion which is located to the right of the vehicle body opening Op1 in the rightward direction r in the vehicle-body right part 223r as seen in the downward direction d. For example, when the front wheel 3 is subjected to a force F in the upward direction u from the road surface, the front part of the vehicle-body main-part upper part 221 is pushed in the backward direction b in the upper part of the vehicle-body main-part upper part 221. That is, the vehicle body 2 is subjected to a force such that the distance between the front end of the vehicle-body main-part upper part 221 and the rear end of the vehicle-body main-part upper part 221 decreases in the upper part of the vehicle-body main-part upper part 221. Moreover, when the front wheel 3 is subjected to a force F in the upward direction u from the road surface, the front part of the vehicle-body main-part upper part 221 is pulled in the frontward direction f in the lower part of the vehicle-body main-part upper part 221. That is, the vehicle body 2 is subjected to a force such that the distance between the front end of the vehicle-body main-part upper part 221 and the rear end of the vehicle-body main-part upper part 221 increases in the lower part of the vehicle-body main-part upper part 221. As a result, the spacing between the vehicle-body-opening left part 2231l and the vehicle-body-opening right part 2231r tends to change in the vehicle-body main-part upper part 221. Accordingly, in the straddled electric vehicle 1, the vehicle body 2 has a structure in which the heat sink 10b is secured to both the vehicle-body left part 223l and the vehicle-body right part 223r such that at least a part of the control circuit 10a is located in the vehicle body space Sp. As a result, in the straddled electric vehicle 1, the deformation of the vehicle body 2 is effectively restricted.

Moreover, the battery 9 is disposed in the vehicle body space Sp. As a result, it becomes possible that the vehicle body 2 holds the battery 9 according to the straddled electric vehicle 1.

Moreover, the vehicle body opening Op1 permits the battery 9 to pass through the vehicle body opening Op1. As a result, according to the straddled electric vehicle 1, it becomes possible to attach the battery 9 to the vehicle body 2 through the vehicle body opening Op1, and to detach the battery 9 through the vehicle body opening Op1.

Moreover, the vehicle body opening Op1 is located above the battery 9 in the upward direction u. As a result, according to the straddled electric vehicle 1, it becomes easy to attach the battery 9 to the vehicle body 2 through the vehicle body opening Op1, and to detach the battery 9 through the vehicle body opening Op1.

Moreover, the front end of the vehicle body opening Op1 is located further upward in the upward direction u than the rear end of the vehicle body opening Op1. The battery 9 has a shape in which the upper end of the front end part of the battery 9 is located further upward in the upward direction u than the upper end of the rear end part of the battery 9. As a result, according to the straddled electric vehicle 1, the vehicle body opening Op1 becomes to have a shape along the upper face of the battery 9 as seen in the leftward direction l or the rightward direction r. As a result, it becomes possible to bring the vehicle body opening Op1 and the upper face of the battery 9 closer to each other. Therefore, in the straddled electric vehicle 1, it is possible to achieve advantageous effects according to (a) or (b).
(a) A wasteful region is reduced in the vehicle body space Sp, and vehicle body 2 is downsized.
(b) A larger battery 9 is accommodated in the vehicle body space Sp.

Further, according to the straddled electric vehicle 1, the battery 9 becomes less likely to displace with respect to the vehicle body 2. To be more specific, in the straddled electric vehicle 1, in a first section at any position in the front-back direction fb, the upper end of the vehicle body 2 is located further upward in the upward direction u than the upper end of the battery 9. This will result in that a substantially entire surface of the left face of the battery 9 is supported by the vehicle-body left part 223l. Further, a substantially entire surface of the right face of the battery 9 will be supported by the vehicle-body right part 223r. As a result, the battery 9 will become less likely to displace in the left-right direction lr with respect to the vehicle body 2.

### (Variants)

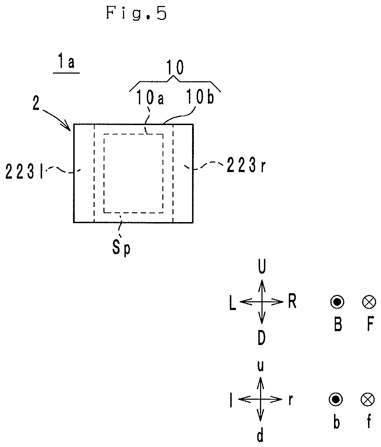

Hereinafter, a straddled electric vehicle according to a variant will be described with reference to the drawings. FIG. 5 is a view of the vehicle body 2 and the control apparatus 10 of a straddled electric vehicle 1a as seen in the frontward direction f.

In the straddled electric vehicle 1, the vehicle body space Sp is a closed space surrounded by the vehicle-body main-part upper part 221, a shock-absorber attachment part 23, a lid part 24, and a heat sink 10b. However, the vehicle body space Sp may not be a closed space. In the straddled electric vehicle 1, as shown in FIG. 1, the rear end part of the vehicle-body left part 223l and the rear end part of the vehicle-body right part 223r have a single annular shape as seen in the frontward direction f by being joined to each other. On the other hand, in the straddled electric vehicle 1a, the rear end of the vehicle-body left part 223l and the rear end of the vehicle-body right part 223r are separated to the left and right without being joined to each other as seen in the frontward direction F as shown in FIG. 5. That is, in the straddled electric vehicle 1a, the vehicle-body left part 223l and the vehicle-body right part 223r do not have an annular shape as seen in the frontward direction f. Therefore, the vehicle body space Sp is opened in the upper face and the lower face.

Moreover, the vehicle body space Sp extends in the front-back direction fb in the vehicle body 2 between the vehicle-body left part 223l and the vehicle-body right part 223r. Therefore, the vehicle body space Sp is a space surrounded by: a virtual surface formed by a straight lines joining the upper edge of the vehicle-body left part 223l and the upper edge of the vehicle-body right part 223r; a virtual surface formed by a straight lines joining the lower edge of the vehicle-body left part 223l and the lower edge of the vehicle-body right part 223r; the vehicle-body left part 223l; and the vehicle-body right part 223r.

Moreover, the heat sink 10b of the control apparatus 10 is secured to the rear end of the vehicle-body left part 223l and the rear end of the vehicle-body right part 223r so as to be overlapped with the vehicle body space Sp as seen in the frontward direction f. Since the control circuit 10a is located on the front face of the heat sink 10b, it contacts the vehicle body space Sp. In this way, the vehicle body 2 has a structure in which the heat sink 10b is secured to both the vehicle-body left part 223l and the vehicle-body right part 223r such that at least a part of the control circuit 10a is located in the vehicle body space Sp.

### (Other Embodiments)

Embodiments and variants to which at least either one of description and illustration is given in the present specification are for the purpose of facilitating the understanding of the present disclosure, and are not intended to limit the scope of the invention which is defined by the appended claims.

The limitations in the claims should be broadly interpreted based on the terms used in the claims, and should not be limited to those of the embodiments and variants recited in the present specification or the prosecution of the present application. Such embodiments and variants should be interpreted as non-exclusive. For example, in the present specification, the terms "preferably" and "excellent" are non-exclusive and means that "preferable, but not limited thereto" and "excellent, but not limited thereto", respectively.

Note that in the straddled electric vehicle 1, the heat sink 10b may be secured to the vehicle-body left part 223l with an adhesive, and also secured to the vehicle-body right part 223r with an adhesive.

Note that the straddled electric vehicle 1 may not be a two-wheel leaning vehicle. That is, the vehicle body 2 may not lean in the leftward direction L when turning to the leftward direction L, and may not lean in the rightward direction R when turning to the rightward direction R. Further, the vehicle body 2, for example, may learn in the rightward direction R when turning to the leftward direction L, and may lean in the leftward direction L when turning to the rightward direction R.

Note that in the straddled electric vehicle 1, the space for the control apparatus 10 is not limited to the rear end of the vehicle body 2. The control apparatus 10 may be disposed in any place as long as it is secured to both the vehicle-body left part 223l and the vehicle-body right part 223r such that at least a part of the control circuit 10a is located in the vehicle body space Sp. Therefore, the control apparatus 10 may be disposed, for example, on the upper face of the vehicle body 2 or on the lower face of the vehicle body 2.

Note that the shape of the battery 9 may not have an L shape as shown in FIG. 1 as seen in the rightward direction r. Therefore, the step 90 may not be provided in the upper face of the battery 9. The upper face of the battery 9 may be, for example, a plane in which the front end of the battery 9 is located further upward in the upward direction u than the rear end of the battery 9. Further, the upper face of the battery 9 may be, for example, one plane which is perpendicular to the up-down direction ud.

Note that in the straddled electric vehicle 1, the vehicle body 2 is formed of a fiber-reinforced resin in which the resin is reinforced by fibers. However, the vehicle body 2 may not be formed of a fiber-reinforced resin in which the resin is reinforced by fibers. The vehicle body 2 may be formed of a material (for example, a metal such as iron and aluminum) other than the fiber-reinforced resin in which the resin is reinforced by fibers.

Note that in the straddled electric vehicle 1, fibers in the attachment surface part 234 extend in the left-right direction lr. However, the fibers in the attachment surface part 234 may extend in a direction (for example, the up-down direction ud) other than the left-right direction lr.

Note that in the straddled electric vehicle 1, fibers of the left side-face part 235l extend in the up-down direction ud. However, the fibers of the left side-face part 235l may extend in a direction (for example, the left-right direction lr) other than the up-down direction ud. Moreover, in the straddled electric vehicle 1, fibers of the right side-face part 235r extend in the up-down direction ud. However, the fibers of the right side-face part 235r may extend in a direction (for example, the left-right direction lr) other than the up-down direction ud.

Note that in the straddled electric vehicle 1, the vehicle body 2 is formed of carbon fiber-reinforced resin in which resin is reinforced with a fiber sheet including fibers. However, the vehicle body 2 may be formed of a fiber-reinforced resin in which unwoven fibers instead of the fiber sheet are used. Also, the fiber may be continuous fibers of a predetermined length (for example, not less than 1 mm), or may be discontinuous fibers.

Note that in the straddled electric vehicle 1, the power unit 8 is supported by the vehicle-body main part 22. However, the power unit 8 may be supported by a component other than the vehicle-body main part 22. For example, the power unit 8 may be supported by a swing arm 61.

Note that in the straddled electric vehicle 1, the vehicle-body main part 22 is a box-type monocoque frame. However, the vehicle-body main part 22 will not be limited to the box-type monocoque frame. The vehicle-body main part 22 may be any of, for example, a double cradle frame, a diamond frame, a truss frame, and a twin-spar frame.

Note that in the straddled electric vehicle 1, the lower end of the shock absorber 62 is directly supported by the swing arm 61. However, the lower end of the shock absorber 62 may not be directly supported by the swing arm 61. The lower end of the shock absorber 62 may be supported by the swing arm 61, for example, via a link member.

Note that the straddled electric vehicle 1 has been supposed to be a vehicle for motorcycle trials. However, the straddled electric vehicle 1 may be a vehicle other than the vehicle for motorcycle trials. The straddled electric vehicle 1 may be any of a super-sport-type vehicle, a tourer-type vehicle, a naked-type vehicle, a cruiser-type vehicle, a scooter-type vehicle, and a motocross-type vehicle. The vehicle for motorcycle trials and the motocross-type vehicle are off-road vehicles. The super-sport-type vehicle, the tourer-type vehicle, the naked-type vehicle, the cruiser-type vehicle, and the scooter-type vehicle are on-road vehicles.

Moreover, the straddled electric vehicle 1 includes one front wheel 3. However, the straddled electric vehicle 1 may include two or more front wheels. Further, the straddled electric vehicle 1 includes one rear wheel 4. However, the straddled electric vehicle 1 may include two or more rear wheels.

Note that the battery 9 may be a battery other than the lithium ion battery. Thus, the battery 9 may be, for example, a lead storage battery, a nickel-metal hydride battery, an all-solid-state battery, or the like.

### REFERENCE SIGNS LIST

1: Straddled electric vehicle
2: Vehicle body
3: Front wheel
4: Rear wheel
5: Steering mechanism
6: Suspension
7: Seat
8: Power unit
9: Battery
10: Control apparatus
10a: Control circuit
10b: Heat sink
21: Head pipe part
22: Vehicle-body main part
23: Shock-absorber attachment part
24: Lid part
51: Handlebar
52: Steering shaft
53: Front fork
61: Swing arm
62: Shock absorber
80: Electric motor
90: Step
90a: Connection surface
90b: Upper face part
90c: Upper face part
221: Vehicle-body main-part upper part
222: Vehicle-body main-part lower part
223l: Vehicle-body left part
223r: Vehicle-body right part
22311: Vehicle-body-opening left part
2231r: Vehicle-body-opening right part
Op1: Vehicle body opening
Op2, Op3: Opening
Sp: Vehicle body space

## Claims

1. A straddled electric vehicle (1), comprising:
at least one steerable wheel (3);
at least one driving wheel (4);
a steering mechanism (5) for steering the at least one steerable wheel (3) in response to operation by a rider;
a battery (9);
a power unit (8) including an electric motor (80) which is supplied with power from the battery (9) to generate driving force, the power unit (8) being adapted to rotate the at least one driving wheel (4) with the driving force generated by the electric motor (80);
a control apparatus (10) including a control circuit (10a) and a heat sink (10b), wherein the control circuit (10a) controls the electric motor (80), and the heat sink (10b) is in contact with the control circuit (10a) to dissipate heat generated by the control circuit (10a); and
a vehicle body (2), wherein
the vehicle body (2) supports the at least one steerable wheel (3), the at least one driving wheel (4), the steering mechanism (5), the battery (9), the power unit (8), and the control apparatus (10),
the vehicle body (2) includes a vehicle-body left part (223l) which is a portion located to the left of a center of the vehicle body (2) in a vehicle-body left-right direction, and a vehicle-body right part (223r) which is a portion located to the right of the center of the vehicle body (2) in the vehicle-body left-right direction, and
the vehicle body (2) forms a vehicle body space (Sp) extending in a vehicle-body front-back direction between the vehicle-body left part (223l) and the vehicle-body right part (223r), wherein
the vehicle body (2) has a structure in which the heat sink (10b) which dissipates the heat generated when the control circuit (10a) controls the electric motor (80) is secured to both the vehicle-body left part (223l) and the vehicle-body right part (223r) such that at least a part of the control circuit (10a) is located in the vehicle body space (Sp) which is formed so as to extend in the vehicle-body front-back direction between the vehicle-body left part (223l) and the vehicle-body right part (223r), wherein
the vehicle body (2) includes a vehicle body opening (Op1), which is located between the vehicle-body left part (223l) and the vehicle-body right part (223r) as seen in the vehicle-body downward direction, and which connects the inside of the vehicle body space (Sp) and the outside of the vehicle body space (Sp),
wherein
the battery (9) is disposed in the vehicle body space (Sp), wherein
the heat sink (10b) is secured to a rear end of the vehicle-body left part (223l) and a rear end of the vehicle-body right part (223r) so as to function as a reinforcing member for restricting the vehicle body (2) from deforming in such a way that the spacing between the vehicle-body left part (223l) and the vehicle-body right part (223r) changes, and so as to be overlapped with the vehicle body space (Sp) as seen in the vehicle-body frontward direction,
**characterized in that**
the control circuit (10a) is located on a front face of the heat sink (10b) and the heat sink (10b) is attached behind the control circuit (10a) in the vehicle-body backward direction (b).

2. The straddled electric vehicle (1) according to claim 1, wherein
at least a part of the heat sink (10b) is exposed from the vehicle-body left part (223l) and the vehicle-body right part (223r) so as to be visible as seen in at least one direction of the vehicle-body frontward direction, the vehicle-body leftward direction, and the vehicle-body rightward direction.

3. The straddled electric vehicle (1) according to claim 1, wherein
at least a part of the vehicle body opening (Op1) is located between the at least one steerable wheel (3) and the at least one driving wheel (4) in the vehicle-body front-back direction.

4. The straddled electric vehicle (1) according to claim 1, wherein
the vehicle body opening (Op1) permits the battery (9) to pass through the vehicle body opening (Op1).

5. The straddled electric vehicle (1) according to any of claims 1 and 4, wherein
the vehicle body opening (Op1) is located above the battery (9) in the vehicle-body upward direction.

6. The straddled electric vehicle (1) according to claim 5, wherein
a front end of the vehicle body opening (Op1) is located further upward in the vehicle-body upward direction than a rear end of the vehicle body opening (Op1), and
an upper end of the front end part of the battery (9) is located further upward in the vehicle-body upward direction than an upper end of the rear end part of the battery (9).

7. The straddled electric vehicle (1) according to any of claims 1 to 6, wherein
the vehicle body (2) further includes a lid part (24) for covering the vehicle body opening (Op1).

8. The straddled electric vehicle (1) according to any of claims 1 to 7, wherein
a section which passes through the battery (9) and is orthogonal to the vehicle-body front-back direction is defined as a first section, and
in the first section at any position in the vehicle-body front-back direction, an upper end of the vehicle body (2) is located further upward in the vehicle-body upward direction than an upper end of the battery (9).

9. The straddled electric vehicle (1) according to any of claims 1 to 8, wherein
the vehicle body (2) is disposed between a steerable wheel axle which is a rotary shaft of the steerable wheel (3) and a driving wheel axle which is the rotary shaft of the driving wheel (4) as seen in the vehicle-body upward or downward direction.

## Patentansprüche

1. Ein rittlings zu fahrendes Elektrofahrzeug (1), das folgende Merkmale aufweist:
zumindest ein lenkbares Rad (3);
zumindest ein Antriebsrad (4);
einen Lenkmechanismus (5) zum Lenken des zumindest einen lenkbaren Rades (3) ansprechend auf eine Betätigung durch einen Fahrer;
eine Batterie (9);
eine Leistungseinheit (8), die einen Elektromotor (80) umfasst, der mit Leistung von der Batterie (9) versorgt wird, um eine Antriebskraft zu erzeugen, wobei die Leistungseinheit (8) dazu angepasst ist, das zumindest eine Antriebsrad (4) mit der durch den Elektromotor (80) erzeugten Antriebskraft zu drehen;
eine Steuervorrichtung (10), die eine Steuerschaltung (10a) und eine Wärmesenke (10b) umfasst, wobei die Steuerschaltung (10a) den Elektromotor (80) steuert und
die Wärmesenke (10b) mit der Steuerschaltung (10a) in Kontakt steht, um durch die Steuerschaltung (10a) erzeugte Wärme abzuleiten; und
eine Fahrzeugkarosserie (2), wobei
die Fahrzeugkarosserie (2) das zumindest eine lenkbare Rad (3), das zumindest eine Antriebsrad (4), den Lenkmechanismus (5), die Batterie (9), die Leistungseinheit (8) und die Steuervorrichtung (10) trägt,
die Fahrzeugkarosserie (2) einen linken Fahrzeugkarosserieteil (223l), der ein Abschnitt ist, der sich in einer Links-Rechts-Richtung der Fahrzeugkarosserie zur Linken einer Mitte der Fahrzeugkarosserie (2) befindet, und einen rechten Fahrzeugkarosserieteil (223r), der ein Abschnitt ist, der sich in der Links-Rechts-Richtung der Fahrzeugkarosserie zur Rechten der Mitte der Fahrzeugkarosserie (2) befindet, umfasst, und
die Fahrzeugkarosserie (2) einen Fahrzeugkarosserieraum (Sp) bildet, der sich in einer Vorne-Hinten-Richtung der Fahrzeugkarosserie zwischen dem linken Fahrzeugkarosserieteil (223l) und dem rechten Fahrzeugkarosserieteil (223r) erstreckt, wobei
die Fahrzeugkarosserie (2) eine Struktur aufweist, bei der die Wärmesenke (10b), die die Wärme ableitet, die erzeugt wird, wenn die Steuerschaltung (10a) den Elektromotor (80) steuert, derart sowohl an dem linken Fahrzeugkarosserieteil (223l) als auch an dem rechten Fahrzeugkarosserieteil (223r) befestigt ist, dass sich zumindest ein Teil der Steuerschaltung (10a) in dem Fahrzeugkarosserieraum (Sp) befindet, der dahin gehend gebildet ist, sich in der Vorne-Hinten-Richtung der Fahrzeugkarosserie zwischen dem linken Fahrzeugkarosserieteil (223l) und dem rechten Fahrzeugkarosserieteil (223r) zu erstrecken, wobei
die Fahrzeugkarosserie (2) eine Fahrzeugkarosserieöffnung (Op1) umfasst, die sich, in der Abwärtsrichtung der Fahrzeugkarosserie betrachtet, zwischen dem linken Fahrzeugkarosserieteil (223l) und dem rechten Fahrzeugkarosserieteil (223r) befindet und die das Innere des Fahrzeugkarosserieraums (Sp) und den Raum außerhalb des Fahrzeugkarosserieraums (Sp) verbindet, wobei
die Batterie (9) in dem Fahrzeugkarosserieraum (Sp) angeordnet ist, wobei
die Wärmesenke (10b) an einem hinteren Ende des linken Fahrzeugkarosserieteils (223l) und an einem hinteren Ende des rechten Fahrzeugkarosserieteils (223r) befestigt ist, um als Verstärkungsbauglied zum Hindern der Fahrzeugkarosserie (2) daran zu fungieren, sich derart zu verformen, dass der Abstand zwischen dem linken Fahrzeugkarosserieteil (223l) und dem rechten Fahrzeugkarosserieteil (223r) verändert, und um in der Vorwärtsrichtung der Fahrzeugkarosserie betrachtet von dem Fahrzeugkarosserieraum (Sp) überlappt zu werden,
**dadurch gekennzeichnet, dass**
sich die Steuerschaltung (10a) auf einer Vorderseite der Wärmesenke (10b) befindet und die Wärmesenke (10b) in der Rückwärtsrichtung (b) der Fahrzeugkarosserie hinter der Steuerschaltung (10a) angebracht ist.

2. Das rittlings zu fahrende Elektrofahrzeug (1) gemäß Anspruch 1, bei dem
zumindest ein Teil der Wärmesenke (10b) von dem linken Fahrzeugkarosserieteil (223l) und dem rechten Fahrzeugkarosserieteil (223r) freiliegt, um, zumindest in einer Richtung der Vorwärtsrichtung der Fahrzeugkarosserie, der links gerichteten Richtung der Fahrzeugkarosserie und der rechts gerichteten Richtung der Fahrzeugkarosserie betrachtet, sichtbar zu sein.

3. Das rittlings zu fahrende Elektrofahrzeug (1) gemäß Anspruch 1, bei dem
sich zumindest ein Teil der Fahrzeugkarosserieöffnung (Op1) in der Vorne-Hinten-Richtung der Fahrzeugkarosserie zwischen dem zumindest einen lenkbaren Rad (3) und dem zumindest einen Antriebsrad (4) befindet.

4. Das rittlings zu fahrende Elektrofahrzeug (1) gemäß Anspruch 1, bei dem
die Fahrzeugkarosserieöffnung (Op1) ermöglicht, dass die Batterie (9) durch die Fahrzeugkarosserieöffnung (Op1) verläuft.

5. Das rittlings zu fahrende Elektrofahrzeug (1) gemäß einem der Ansprüche 1 und 4, bei dem
sich die Fahrzeugkarosserieöffnung (Op1) in der Aufwärtsrichtung der Fahrzeugkarosserie über der Batterie (9) befindet.

6. Das rittlings zu fahrende Elektrofahrzeug (1) gemäß Anspruch 5, bei dem
sich ein vorderes Ende der Fahrzeugkarosserieöffnung (Op1) in der Aufwärtsrichtung der Fahrzeugkarosserie weiter oben befindet als ein hinteres Ende der Fahrzeugkarosserieöffnung (Op1) und
sich ein oberes Ende des Teils des vorderen Endes der Batterie (9) in der Aufwärtsrichtung der Fahrzeugkarosserie weiter oben befindet als ein oberes Ende des Teils des hinteren Endes der Batterie (9).

7. Das rittlings zu fahrende Elektrofahrzeug (1) gemäß einem der Ansprüche 1 bis 6, bei dem
die Fahrzeugkarosserie (2) ferner ein Deckelteil (24) zum Abdecken der Fahrzeugkarosserieöffnung (Op1) umfasst.

8. Das rittlings zu fahrende Elektrofahrzeug (1) gemäß einem der Ansprüche 1 bis 7, bei dem
ein Segment, das durch die Batterie (9) verläuft und das zu der Vorne-Hinten-Richtung der Fahrzeugkarosserie orthogonal ist, als erstes Segment definiert ist und
bei dem ersten Segment in einer beliebigen Position in der Vorne-Hinten-Richtung der Fahrzeugkarosserie sich ein oberes Ende der Fahrzeugkarosserie (2) in der Aufwärtsrichtung der Fahrzeugkarosserie weiter oben befindet als ein oberes Ende der Batterie (9).

9. Das rittlings zu fahrende Elektrofahrzeug (1) gemäß einem der Ansprüche 1 bis 8, bei dem
die Fahrzeugkarosserie (2) in der Aufwärts- oder Abwärtsrichtung der Fahrzeugkarosserie betrachtet zwischen einer Achse eines lenkbaren Rades, die eine Drehwelle des lenkbaren Rades (3) ist, und einer Antriebsradachse, die die Drehwelle des Antriebsrades (4) ist, angeordnet ist.

## Revendications

1. Véhicule électrique à selle (1), comprenant:
au moins une roue orientable (3);
au moins une roue motrice (4);
un mécanisme de direction (5) destiné à diriger l'au moins une roue orientable (3) en réaction à l'actionnement par un pilote;
une batterie (9);
une unité d'alimentation (8) comportant un moteur électrique (80) qui est alimenté en énergie de la batterie (9) pour générer une force motrice, l'unité d'alimentation (8) étant adaptée pour faire tourner l'au moins une roue motrice (4) par la force motrice générée par le moteur électrique (80);
un appareil de commande (10) comportant un circuit de commande (10a) et un dissipateur thermique (10b), où le circuit de commande (10a) commande le moteur électrique (80), et le dissipateur thermique (10b) est en contact avec le circuit de commande (10a) pour dissiper la chaleur générée par le circuit de commande (10a); et
une carrosserie de véhicule (2),
dans lequel
la carrosserie de véhicule (2) supporte l'au moins une roue orientable (3), l'au moins une roue motrice (4), le mécanisme de direction (5), la batterie (9), l'unité d'alimentation (8) et l'appareil de commande (10),
la carrosserie de véhicule (2) comporte une partie gauche de carrosserie de véhicule (2231) qui est une partie située à gauche d'un centre de la carrosserie de véhicule (2) dans une direction gauche-droite de la carrosserie de véhicule, et une partie droite de carrosserie de véhicule (223r) qui est une partie située à droite du centre de la carrosserie de véhicule (2) dans la direction gauche-droite de la carrosserie de véhicule, et
la carrosserie de véhicule (2) forme un espace de carrosserie de véhicule (Sp) s'étendant dans une direction avant-arrière de la carrosserie de véhicule entre la partie gauche de carrosserie de véhicule (223l) et la partie droite de carrosserie de véhicule (223r),
dans lequel la carrosserie de véhicule (2) présente une structure dans laquelle le dissipateur thermique (10b), qui dissipe la chaleur générée lorsque le circuit de commande (10a) commande le moteur électrique (80), est fixé tant à la partie gauche de carrosserie de véhicule (223l) qu'à la partie droite de carrosserie de véhicule (223r) de sorte qu'au moins une partie du circuit de commande (10a) se situe dans l'espace de carrosserie de véhicule (Sp) qui est formé de manière à s'étendre, dans la direction avant-arrière de la carrosserie de véhicule, entre la partie gauche de carrosserie de véhicule (223l) et la partie droite de carrosserie de véhicule (223r),
dans lequel la carrosserie de véhicule (2) comporte une ouverture de carrosserie de véhicule (Op1) qui est située entre la partie gauche de carrosserie de véhicule (223l) et la partie droite de carrosserie de véhicule (223r), tel que vu dans la direction vers le bas de la carrosserie de véhicule, et qui connecte l'intérieur de l'espace de carrosserie de véhicule (Sp) et l'extérieur de l'espace de carrosserie de véhicule (Sp),
dans lequel la batterie (9) est disposée dans l'espace de carrosserie (Sp) du véhicule,
dans lequel le dissipateur thermique (10b) est fixé à une extrémité arrière de la partie gauche de carrosserie de véhicule (223l) et à une extrémité arrière de la partie droite de carrosserie de véhicule (223r) de manière à fonctionner comme élément de renfort pour limiter le fait que la carrosserie de véhicule (2) se déforme de manière telle que change l'espacement entre la partie gauche de carrosserie de véhicule (223l) et la partie droite de carrosserie de véhicule (223r), et de manière à être chevauché par l'espace de carrosserie de véhicule (Sp), tel que vu dans la direction vers l'avant de la carrosserie de véhicule,
**caractérisé par le fait que**
le circuit de commande (10a) est situé sur une face avant du dissipateur thermique (10b) et le dissipateur thermique (10b) est fixé derrière le circuit de commande (10a) dans la direction vers l'arrière de la carrosserie de véhicule (b).

2. Véhicule électrique à selle (1) selon la revendication 1, dans lequel
au moins une partie du dissipateur thermique (10b) est exposée depuis la partie gauche de carrosserie de véhicule (223l) et la partie droite de carrosserie de véhicule (223r) de manière à être visible dans au moins une direction parmi la direction vers l'avant de la carrosserie de véhicule, la direction vers la gauche de la carrosserie de véhicule et la direction vers la droite de la carrosserie de véhicule.

3. Véhicule électrique à selle (1) selon la revendication 1, dans lequel
au moins une partie de l'ouverture de carrosserie de véhicule (Op1) est située entre l'au moins une roue orientable (3) et l'au moins une roue motrice (4) dans la direction avant-arrière de la carrosserie de véhicule.

4. Véhicule électrique à selle (1) selon la revendication 1, dans lequel
l'ouverture de carrosserie de véhicule (Op1) permet à la batterie (9) de passer à travers l'ouverture de carrosserie de véhicule (Op1).

5. Véhicule électrique à selle (1) selon l'une quelconque des revendications 1 et 4, dans lequel
l'ouverture de carrosserie de véhicule (Op1) est située au-dessus de la batterie (9) dans la direction vers le haut de la carrosserie de véhicule.

6. Véhicule électrique à selle (1) selon la revendication 5, dans lequel
une extrémité avant de l'ouverture de carrosserie de véhicule (Op1) est située plus vers le haut dans la direction vers le haut de la carrosserie de véhicule qu'une extrémité arrière de l'ouverture de carrosserie de véhicule (Op1), et
une extrémité supérieure de la partie d'extrémité avant de la batterie (9) est située plus vers le haut dans la direction vers le haut de la carrosserie de véhicule qu'une extrémité supérieure de la partie d'extrémité arrière de la batterie (9).

7. Véhicule électrique à selle (1) selon l'une quelconque des revendications 1 à 6, dans lequel
la carrosserie de véhicule (2) comporte par ailleurs une partie de couvercle (24) destinée à couvrir l'ouverture de carrosserie de véhicule (Op1).

8. Véhicule électrique à selle (1) selon l'une quelconque des revendications 1 à 7, dans lequel
un segment qui passe à travers la batterie (9) et est orthogonale à la direction avant-arrière de la carrosserie de véhicule est défini comme un premier segment, et
dans le premier segment à toute position dans la direction avant-arrière de la carrosserie de véhicule, une extrémité supérieure de la carrosserie de véhicule (2) est située plus vers le haut dans la direction vers le haut de la carrosserie de véhicule qu'une extrémité supérieure de la batterie (9).

9. Véhicule électrique à selle (1) selon l'une quelconque des revendications 1 à 8, dans lequel
la carrosserie de véhicule (2) est disposée entre un axe de roue orientable qui est un arbre rotatif de la roue orientable (3) et un axe de roue motrice qui est l'arbre rotatif de la roue motrice (4), tel que vu dans la direction vers le haut ou vers le bas de la carrosserie de véhicule.
